# EUROPÄISCHE PATENTSCHRIFT

(11) **EP 0 527 109 B1**
(45) Veröffentlichungstag und Bekanntmachung des Hinweises auf die Patenterteilung: **13.05.1998**
(21) Anmeldenummer: 92810587.3
(22) Anmeldetag: 03.08.1992
(51) Int. Cl.: B32B 7/14, B32B 3/12

(54) **Verfahren zur Herstellung einer Verbundplatte aus einem zellenförmigen Kern und mindestens einer Deckschicht**
Process for the manufacture of a composite panel with a cellular core and at least one outer layer
Procédé pour la fabrication d'un panneau composite d'âme cellulaire et d'au moins une couche

(30) Priorität: 05.08.1991 CH 2314/91
(43) Veröffentlichungstag der Anmeldung: 10.02.1993
(73) Patentinhaber: Alusuisse Technology & Management AG, 8212 Neuhausen am Rheinfall (CH)
(72) Erfinder: Meier, Johannes, CH-8212 Neuhausen am Rheinfall (CH); Gabi, Urs, CH-8116 Würenlos (CH)

(56) Entgegenhaltungen:
- EP-A- 0 075 033
- EP-A- 0 288 843
- GB-A- 2 096 535
- GB-A- 2 104 839
- US-A- 3 732 138

## Beschreibung

Die Erfindung betrifft ein Verfahren zum Herstellen einer Verbundplatte aus einem zellenförmigen Kern mit mindestens einer Deckschicht durch Verbinden der Deckschicht mit dem zellenförmigen Kern mit Hilfe von Klebstoff, wobei Klebstoff auf den zellenförmiger Kern aufgebracht, anschliessend die Deckschicht aufgebracht und diese unter Druck und bei erhöhter Temperatur mit dem zellenförmigen Kern verbunden wird. Die Erfindung betrifft auch die Verbundplatten hergestellt nach dem Verfahren und deren Verwendung.

Beim Verbinden von zellenförmigen Kernen und Deckschichten kann grundsätzlich ein Klebstoff seine Wirkung nur an den Kontaktstellen des zellenförmigen Kernes mit den Deckschichten erfüllen. Ein wesentlicher Nachteil von Klebeverfahren liegt darin, dass der Klebstoff vollflächig aufgetragen wird sich nicht verstärkt an den Kontaktstellen von zellenförmigem Kern und Deckschicht befindet.

In der GB 2 096 535 A wird ein Verfahren zum Verbinden eines Honigwabenkerns mit wenigstens einem perforierten Element beschrieben, wobei ein Klebefilm auf das perforierte Element oder auf den Honigwabenkern aufgebracht wird.

Die bis anhin bekannt gewordenen Klebe-Verbindungen von Honigwabenkernen mit Deckschichten konnten nicht allen gestellten Anforderungen, beispielsweise bezüglich der Delamination oder der Trennfestigkeit der Schichten, gerecht werden. Aufgabe vorliegender Erfindung ist es, diese genannten Nachteile zu überwinden.

Erfindungsgemäss wird die gestellte Aufgabe durch ein Verfahren gelöst, dass sich der Klebstoff (84) auf dem zellenförmigen Kern (41) tropfenförmig nur an den Stirnseiten der Zellen befindet und dass die auf den zellenförmigen Kern zulaufende Deckschicht (42) auf der Seite, die gegen den zellenförmigen Kern (41) gerichtet ist, eine Klebstoffschicht oder eine Klebefolie (83) aufweist.

Zweckmässig ist ein Verfahren zum Herstellen einer Verbundplatte (90) nach vorliegender Erfindung das dadurch gekennzeichnet ist, dass eine Klebefolie (84) nach dem Auflegen auf den zellenförmigen Kern (41) mit Wärme und einem gasförmigen Medium beaufschlagt wird und die Klebefolie (84) sich netzartig ausbildet und tropfenförmig die Stirnkanten (82) der Wabenzellen (80) umhüllt.

Das erfindungsgemässe Verfahren kann mit Deckschichten aus verschiedenen Materialien ausgeführt werden. Geeignete Materialien sind zum Beispiel Kunststoffe auf Polyolefinbasis, auf Polyamidbasis, auf Acryl-Butadien-Styrolbasis, Phenol-Formaldehydharzbasis usw. Die Kunststoffe können durch Füll- und/oder Verstärkungsstoffe modifiziert sein. Füllstoffe sind z.B. Pigmente, wie TiO₂, und feinstteilige Stoffe können z.B. aus der Reihe des Al₂O₃ oder SiO₂ sein. Verstärkungs- oder Armierungsstoffe können Fasern, Gewebe, Gewirke oder Vliese aus Glas, Kohlenstoff, thermoplastischen Kunststoffen, Aramid, Kevlar, SiC- oder SiN-Whiskern, aus natürlichen Materialien, wie Jute, Sisal, Hanf, Baumwolle, Wolle und dergleichen sein.

Bevorzugte Deckschichten sind aus Metallen, beispielsweise der Reihe des Eisens, Stahls, Zinks, des verzinkten Eiseng, des Zinns, der Bronze, der Buntmetalle, des Kupfers oder besonders bevorzugt des Aluminiums oder seiner Legierungen. Die Metalle werden insbesondere als Folien, Bänder oder Platten angewendet. Die Dicke solcher Deckschichten liegt zweckmässig im Bereich von 0,2 bis 2,5 mm.

Die zellenförmigen Kerne können beispielsweise aus Metallen, wie die obengenannten, oder aus anderen Materialien, wie Kunststoffen, Papier, Pappe oder dergleichen sein. Bevorzugt sind die zellenförmigen Kerne aus Aluminium oder dessen Legierungen. Bevorzugt weisen die zellenförmigen Kerne ein Raumgewicht von 20 bis 120 kg/m³ auf.

Die zellenförmigen Kerne stellen z.B. Bündel von einzelnen Zellen dar. Die einzelnen Zellen können in der Draufsicht einen runden oder polygonalen, z.B. viereckigem oder sechseckigem, Querschnitt aufweisen. Entsprechend können die Kerne in der Draufsicht die Gestalt von z.B. Rohrbündeln oder Honigwaben aufweisen. Bevorzugt als zellenförmige Kerne sind Wabenkerne mit sechseckigem Querschnitt einer einzelnen Zelle.

Geeignete Klebstoffe können chemisch oder physikalisch abbindende Klebstoffe sein. Beispiele von physikalisch abbindenden Klebstoffen sind Schmelz-, Haft-, Kontakt- oder Lösungsmittelklebstoffe oder Leime, die kalt oder warm abbinden können. Beispiele von chemisch abbindenden Klebstoffen sind Ein- und Zweikomponentenklebstoffe, Kalt- und Warmklebstoffe und Reaktionsklebstoffe.

Nach vorliegender Erfindung liegt der Klebstoff als solcher resp. als Klebefolie, Klebefilm, resp. als folienförmiger Klebstoff vor. Beispielsweise können als Klebefolien geschäumte oder schäumbare Folien verwendet werden. Bei den schäumbaren Folien sind die unter Wärmeeinwirkung aufschäumenden Klebefolien besonders bevorzugt. Auch bevorzugt sind als Klebefolien geschäumte Folien mit geschlossenzelliger Schaumstruktur.

Nach vorliegender Erfindung werden insbesondere thermoplastische Klebefolien auf Basis von Polyolefinen, wie Polyethylenen, angewendet. Die Dicke der Klebstoffschichten und insbesondere der Klebefolien kann beispielsweise von 50 bis 500 µm betragen.

Bevorzugt ist ein Dickenverhältnis zwischen der Klebefolie, die auf den zellenförmiger Kern aufgelegt wird, zu der Klebstoffschicht oder Klebefolie, die auf die Deckschicht aufgebracht wird, beispielsweise von 1 zu 0,01 bis 1 zu 20, zweckmässig von 1 zu 0,2 bis 1 zu 2. Ein bevorzugtes Verhältnis ist 1 zu 0,3 bis 1 zu 1 und ganz besonders bevorzugt ist ein Verhältnis von 1 zu 0,4 bis 1 zu 0,5.

Ein zweckmässiges Raumgewicht der Klebefolien kann von 200 bis 1500 kg/m³, resp. bei geschäumten Klebefolien kann das Raumgewicht von 20 bis 1000 kg/m³ betragen. Entsprechende Klebstoffmengen betragen dann für Klebefolien 0,005 bis 0,05 g/cm², resp. 50 bis 500 g/m². Mengen von 150 bis 250 g/m² werden bevorzugt. Wird der Klebstoff in lack- oder filmform angewendet, so sind geeignete Mengen, pro Seite, 1 bis 50 g/m².

Nach dem Auflegen der Klebefolie auf den zellenförmigen Kern wird nach der Erfindung die Klebefolie mit Wärme und einem gasförmigen Medium beaufschlagt. Die Wärme kann z.B. durch Strahlung und nachfolgend die Beaufschlagung mit dem gasförmigen Medium mit einem Gebläse erfolgen. In der Regel werden die beiden Prozesse kombiniert und die Beaufschlagung der Klebefolie kann zweckmässig über ein Heissluftgebläse und Düsenanordnungen erfolgen.

Das gasförmige Medium kann beispielsweise Luft, Stickstoff, Kohlendioxid, ein Edelgas, soweit noch zugelassen ein Fluorchlorkohlenwasserstoff oder Gemische genannter Gase sein. Das gasförmige Medium ist bevorzugt Luft, die das Heissluftgebläse als Heissluft verlässt.

Bei der Ausführung des erfindungsgemässen Verfahrens richtet sich die Temperatur des gasförmigen Mediums u.a. nach der Art des Klebstoffes und auch nach dessen Erweichungs- oder Schmelzbereich. Beispielsweise weist die Heissluft eine Temperatur im Bereich von 150 bis 450 °C auf. Die Geschwindigkeit des gasförmigen Mediums kann z.B. von 5 bis 20 m/sec betragen.

Das Verbinden der Deckschichten mit dem Kern erfolgt unter Druck und erhöhter Temperatur. Der Druck der über die Deckschicht auf die Klebstoffschicht und den Kern ausgeübt wird, kann beispielsweise 0,1 bis 1000 N/cm² betragen. In der Praxis können bevorzugt Drücke von 1 bis 500 N/cm² und insbesondere 10 bis 150 N/cm², angewendet werden. Die Druckanwendung erfolgt in der Regel durch mechanisch erzeugten Druck auf die Deckschichten. Dies kann durch eine Presse, enthaltend Stempel und Matrize, erfolgen, wobei der Druck mechanisch, hydraulisch oder pneumatisch erzeugt werden kann. Die angewendete Temperatur richtet sich in grossem Masse nach der Art des Klebstoffes und kann beispielsweise von 50 bis 400° C betragen, wobei ein Bereich von 100 bis 200° C bevorzugt ist.
Bevorzugt werden kontinuierliche Verfahren und insbesondere können die Deckschicht oder die Deckschichten mit dem zellenförmigen Kern in einer Doppelbandpresse verbunden werden.

Weitere Einzelheiten der Erfindung ergeben sich nachfolgend aus den beispielhaften schematischen Zeichnungen. Diese zeigen in:
Figuren 1a, 1b in perspektivischen Darstellungen einen Ausschnitt eines zellenförmigen Kernes und dabei beispielhaft eines Wabenkerns und eine einzelne Wabenzelle daraus,
Figur 2 einen Schnitt durch eine Deckschicht mit Klebefolie und einen Wabenkern mit eingeplatzter Klebefolie,
Figur 3 einen Schnitt durch eine Kontaktstelle von Wabenkern und Deckschicht und in
Figur 4 die Herstellung einer Verbundplatte mittels einer Doppelbandpresse.

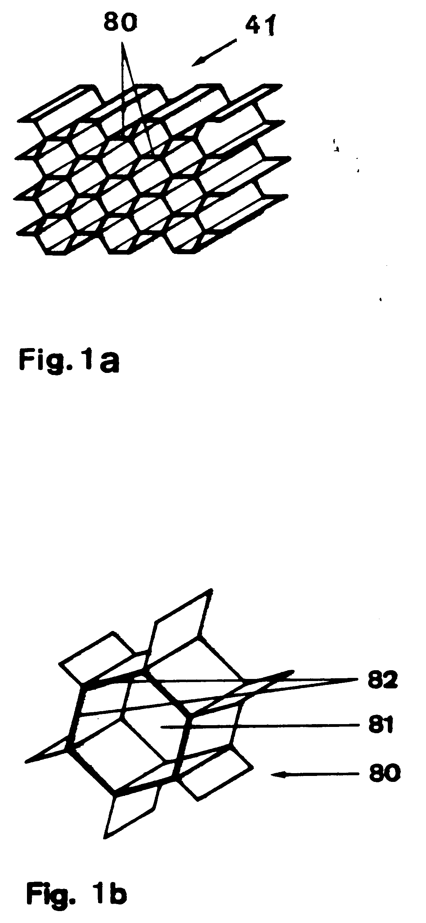

Figur 1a zeigt einen zellenförmigen Kern 41 und dabei beispielhaft einen Wabenkern mit hexagonaler Ausbildung der Wabenzellen 80. Eine einzelne Wabenzelle 80 ist in Figur 1b dargestellt. Nach dem erfindungsgemässen Verfahren wird zunächst die Klebefolie 84, insbesondere möglichst glattflächig auf den Wabenkern 41 gelegt. Durch die vollflächige Ausbildung der Klebefolie 84 überdeckt diese auch das Innere 81 der einzelnen Wabenzellen 80. Die Stirnkanten 82 der Wabenzellen 80 stehen in Kontakt mit der Klebefolie 84. Nach dem Auflegen der Klebefolie 84 auf dem Wabenkern 41 wird diese mit Wärme und einem gasförmigen Medium beaufschlagt. Diese Vorgehensweise bewirkt, dass die Klebefolie 84 aufweicht bzw. aufschmilzt und nur an den Stirnkanten 82 der Wabenzellen 80 haften bleibt. Der Vorgang läuft so ab, dass die Klebefolie 84 über dem Innern 81 der Wabenzellen 80 aufplatzt und durch die Spannung der Klebefolie 84 bzw. die Klebstoffoberflächenspannung und/oder durch die Strömung des gasförmigen Mediums der Klebstoff sich vom Innern 81 der Wabenzellen 80 an die Stege im Bereich ihrer Stirnkanten 82 zurückzieht. Die Folge ist, dass alleinig an den Stirnkanten 82 Klebstoff vorhanden ist, und dies in erhöhtem Masse als es die Folie alleine bewirken könnte, es sei denn man nehme eine dickere Folie, was zu erhöhtem Materialverbrauch und damit zu erhöhten Kosten führen würde.

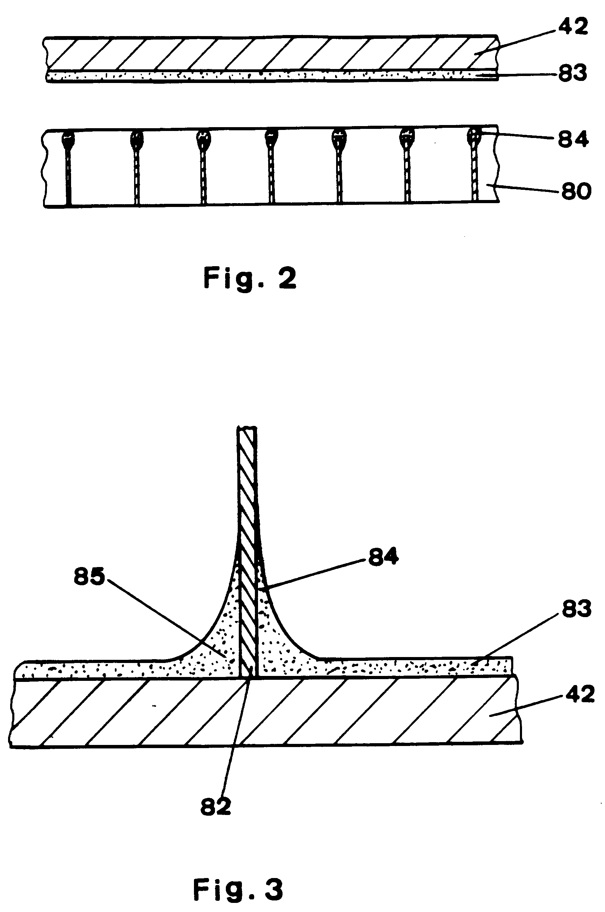

Gemäss Figur 2 wird bei der erfindungsgemässen Verwendung von zwei Klebefolien 83, 84 eine Klebefolie 83 auf die der Innenseite der Verbundplatte 90 zugekehrten Oberfläche der Deckschicht 42 aufgebracht und die andere Klebefolie 84 auf den Wabenkern 41 aufgelegt und in erfindungsgemässer Weise behandelt, so dass diese Klebefolie netzartig ausgebildet ist und tropfenförmig die Stirnkanten 82 der Wabenzellen 80 umhüllt. Danach werden die beiden Klebefolien 83, 84 in Kontakt gebracht.

Figur 3 zeigt eine Kontaktstelle von Wabenkern 41 und Deckschicht 42, wobei zwei Klebefolien 83, 84 erfindungsgemäss Verwendung finden. Durch die tropfenförmige Ausbildung der Klebefolie 84 an den Stirnkanten 82 der Wabenzellen 80 bildet sich eine verstärkte Klebekontur 85 aus, deren Klebwirkung durch die Klebefolie 83 zusätzlich verstärkt wird.

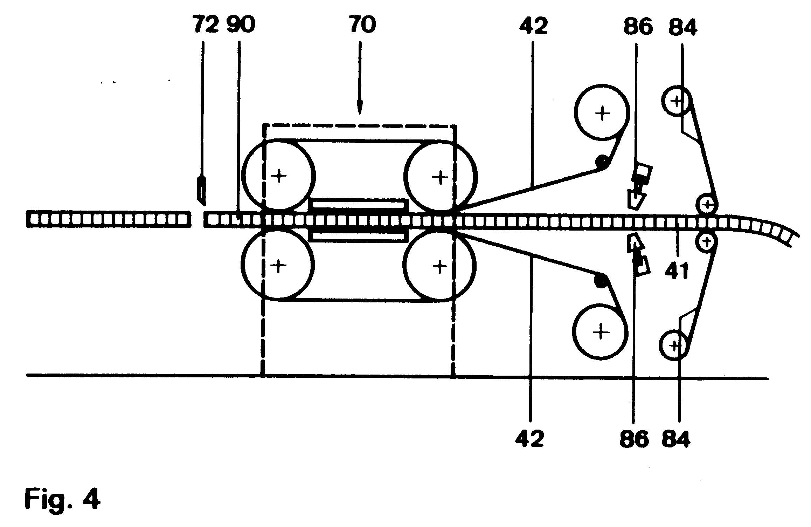

Figur 4 zeigt die Anwendung des erfindungsgemässen Verfahrens zur Herstellung einer kontinierlich gefertigten Verbundplatte 90. Zunächst wird der Wabenkern 41 beidseits an den Stirnkanten 82 der Wabenzellen 80 mit Klebstoff in Form von Folien 84 versehen. Nach dem Auflegen der Klebstoffolien 84 auf die Stirnkanten 82 des Wabenkerns 41 werden die Klebstoffolien 84 mit einem heissen gasförmigen Medium, insbesondere Heissluft, beaufschlagt. Dies geschieht mit den beidseits des Wabenkerns 41 angeordneten Heissluftgebläsen 86. Diese Vorgehensweise bewirkt, dass die Klebstoffolien 84 aufweichen bzw. aufschmelzen und der Klebstoff nur an den Stirnkanten 82 der Wabenzellen 80 haften bleibt. Danach werden die Deckschichten 42 aufgebracht.

Die Deckschichten 42 können bereits die Klebefolie 83, die ihrerseits zwischen die Deckschicht 42 und den Wabenkern 41 zu liegen kommt, auf der entsprechenden Seite der Deckschicht 42 angebracht sein. In diesem Falle kann die Deckschicht 42 und die Klebefolie 83 ein Laminat bilden, das beispielsweise in Rollenform vorliegen und kontinuerlich dem Verfahren der Verbundplattenfertigung zugeführt werden kann. Die Deckschichten 42 und die Klebefolien 83 können auch auf separaten Vorratsrollen bereit gestellt und unmittelbar vor der Verbundplattenfertigung zu einem Laminat vereinigt werden.

Im Falle, dass auf die Deckschicht eine Klebstoffschicht aufgetragen werden soll, kann der Klebstoff als solcher, oder gelöst, suspendiert oder dispergiert in einem Lösungsmittel resp. Trägermedium angewendet werden und beispielsweise durch aufpinseln, aufrakeln, aufsprühen usw. auf die eine Seite der Deckschicht aufgebracht werden.

Das aus dem Wabenkern 41 mit beidseits netzartig angeordnetem Klebstoff und darüberliegenden mit Klebefolien versehenen Deckschichten 42, welche beispielsweise Aluminium-Deckschichten sind, bestehende Sandwich wird beispielhaft einer Durchlaufpresse 70 zugeführt und dort zu einer Verbundplatte 90 verbunden. Die so kontiniuierlich hergestellte Verbundplatte 90 kann in an sich bekannter Weise durch eine Schneidvorrichtung 72 auf das gewünschte Mass abgelängt werden.

Vorliegende Erfindung betrifft auch Verbundplatten, hergestellt nach dem erfindungsgemässen Verfahren oder nach seinen zweckmässigen oder bevorzugten Ausführungsformen.

Die Verbundplatten, die nach dem erfindungsgemässen Verfahren herstellbar sind, können beispielsweise als Bodenplatten, Seitenbeplankungen, Deckenplatten, Trennwänden usw. in Transporteinrichtungen, wie Bussen, Eisenbahnwagen und Flugzeugen oder an Grossbehältern, wie Containern, Luftfrachtcontainern und dergl. oder als Boden-, Wand- oder Deckenplatten in oder an Gebäuden verwendet werden. Die erfindungsgemässen Verbundplatten können darüberhinaus auch zu Möbeln, Möbelteilen, Inneneinrichtungen, Inneneinrichtungsteilen, Sportgeräten oder Sportgeräteteilen verwendet werden.

### Beispiel 1

Es werden zwei Deckschichten aus Aluminium mit einer Dicke von 0,5 mm einseitig mit einer Klebefolie auf Basis von Polyolefinen beschichtet. Die Klebstoffmenge beträgt jeweils ca. 100 g/m² pro behandelte Seite der Deckschicht. Ein Wabenkern aus Aluminium mit einem sechseckigen Zellenquerschnitt und einem Raumgewicht von ca. 80 kg/m³ wird auf jeder Seite des Wabenkerns mit ca. 100 g/m² Klebstoff in Folienform beschichtet. Dazu werden die Klebefolien glattflächig beidseitig auf den Wabenkern aufgelegt und danach mit einem Heissluftgebläse mit Luft einer Temperatur von ca. 250 °C beaufschlagt. Die Geschwindigkeit des Heissluftstromes beträgt dabei ca. 8 m/sec. Bei der Behandlung schmilzt der Klebefilm und bleibt nur an den Stirnkanten der Wabenzellen haften. Unmittelbar anschliessend werden beidseitig des Wabenkernes die Deckschichten, mit der Klebefolie gegen den Wabenkern gerichtet, mit den mit Klebestoff bedeckten Stirnseiten des Wabenkern in einer Bandpresse in Kontakt gebracht. Die beiden Deckschichten werden mit einem Druck von ca. 80 N/cm² beaufschlagt und gegen den Wabenkern gedrückt. In der Bandpresse folgt der kontinuierlich entstehende Verbund einem Temperaturprofil mit Heiz- und nachfolgender Abkühlzone. So entsteht der Verbund a).

### Beispiel 2, Vergleichsversuche

Die oben beschriebene Versuchsanordnung wird wiederholt, mit der Ausnahme, dass die Deckschichten nicht mit Klebefolien bedeckt sind. Dabei bleibt jedoch die gesamte Klebstoffmenge gleich, d.h. jede beschichtete Seite trägt gegenüber dem vorherigen Versuch die doppelte Klebstoffmenge. Es befindet sich nur an den beiden Stirnseiten des Wabenkerns Klebstoff. Es wird ein Verbund b) hergestellt.

Die Versuchsanordnung wird nochmals wiederholt, mit der Ausnahme, dass nur auf den beiden Deckschichten jeweils einseitig Klebefolien angebracht werden, während auf den Wabenkern keine Klebefolien angebracht werden. Dabei bleibt jedoch die gesamte Klebstoffmenge gleich, d.h. jede beschichtete Seite trägt gegenüber dem ersten Versuch die doppelte Klebstoffmenge. Es befindet sich nur an den beiden Innenflächen der Deckschichten Klebstoff. Es wird ein Verbund c) hergestellt.

### Beispiel 3

Die Verbunde a), b) und c) werden einer Prüfung zur Bestimmung des Schälmomentes nach DIN 53 295 unterworfen. Bei der Prüfung werden die Deckschichten mechanisch vom Wabenkern getrennt und die dazu erforderlichen Kräfte gemessen. Setzt man die Kraft zur Trennung der Deckschicht vom Wabenkern bei Verbund c) mit 100% an, so beträgt die Kraft für Verbund b) 300% und für den erfindungsgemäss hergestellten Verbund a) 600%.

## Patentansprüche

1. Verfahren zum Herstellen einer Verbundplatte (90) aus einem zellenförmigen Kern (41) und mindestens einer Deckschicht (42) durch Verbinden der Deckschicht (42) mit dem zellenförmigen Kern (41) mit Hilfe von Klebstoff, wobei Klebstoff (84) auf den zellenförmigen Kern (41) aufgebracht wird, anschliessend die Deckschicht (42) aufgebracht und diese unter Druck bei erhöhter Temperatur mit dem zellenförmigen Kern (41) verbunden wird, dadurch gekennzeichnet, dass sich der Klebstoff (84) auf dem zellenförmigen Kern (41) tropfenförmig nur an den Stirnseiten der Zellen befindet und dass die auf den zellenförmigen Kern zulaufende Deckschicht (42) auf der Seite, die gegen den zellenförmigen Kern (41) gerichtet ist, eine Klebstoffschicht oder eine Klebefolie (83) aufweist.

2. Verfahren zum Herstellen einer Verbundplatte (90) nach Anspruch 1, dadurch gekennzeichnet, dass eine Klebefolie (84) nach dem Auflegen auf den zellenförmigen Kern (41) mit Wärme und einem gasförmigen Medium beaufschlagt wird und die Klebefolie (84) sich netzartig ausbildet und tropfenförmig die Stirnkanten (82) der Wabenzellen (80) umhüllt.

3. Verfahren nach Anspruch 2, dadurch gekennzeichnet, dass das gasförmige Medium Luft ist und die Temperatur der Luft zweckmässig 150° C bis 450° C beträgt.

4. Verfahren nach Anspruch 3, dadurch gekennzeichnet, dass die Beaufschlagung durch ein beheizbares Gebläse (86) erfolgt.

5. Verfahren nach einem der Ansprüche 1 bis 4, dadurch gekennzeichnet, dass als Klebstoff oder als Klebefolien (83,84) eine geschäumte bzw. eine schäumbare Folie verwendet wird.

6. Verfahren nach Anspruch 5, dadurch gekennzeichnet, dass als Klebstoff oder als Klebefolie (83,84) eine geschäumte Folie mit geschlossenzelliger Struktur verwendet wird.

7. Verfahren nach einem der Ansprüche 1 bis 6, dadurch gekennzeichnet, dass die Verbindung der Deckschicht(en) während des Pressvorganges (42) mit dem zellenförmigen Kern (41) bei einer Temperatur von 50 bis 400° C, vorzugsweise bei 100 bis 200° C, erfolgt.

8. Verfahren nach Anspruch 7, dadurch gekennzeichnet, dass die Verbindung der Deckschicht(en) (42) mit dem zellenförmigen Kern (41) in einer Doppelbandpresse (70) erfolgt.

9. Verbundplatte, hergestellt nach einem Verfahren gemäss Ansprüchen 1 bis 8.

10. Verwendung von Verbundplatten nach Anspruch 9 als Bodenplatten, Seitenbeplankungen, Deckenplatten, Trennwänden usw. in Transporteinrichtungen, wie Bussen, Eisenbahnwagen und Flugzeugen oder an Grossbehältern, wie Containern und Luftfrachtcontainern oder als Boden-, Wand- oder Deckenplatten in oder an Gebäuden oder für Möbel, Möbelteile, Inneneinrichtungen, Inneneinrichtungsteile, Sportgeräte oder Sportgeräteteile.

## Claims

1. Process for the manufacture of a composite panel (90) consisting of a cellular core (41) and at least one outer layer (42) by bonding the outer layer (42) to the cellular core (41) with the aid of adhesive, adhesive (84) being applied to the cellular core (41), then the outer layer (42) being applied and the latter being bonded to the cellular core (41) under pressure at an elevated temperature, characterised in that the adhesive (84) is located on the cellular core (41) in the form of drops only on the end faces of the cells and that the outer layer (42) running on to the cellular core is provided on the side directed towards the cellular core (41) with an adhesive layer or an adhesive film (83).

2. Process for the manufacture of a composite panel (90) according to claim 1, characterised in that heat and a gaseous medium are applied to an adhesive film (84) after it is applied to the cellular core (41) and the adhesive film (84) forms a mesh-type structure and surrounds the end edges (82) of the honeycomb cells (80) in the form of drops.

3. Process according to claim 2, characterised in that the gaseous medium is air and the temperature of the air is advantageously 150°C to 450°C.

4. Process according to claim 3, characterised in that the air is applied by means of a heatable blower (86).

5. Process according to one of claims 1 to 4, characterised in that an expanded or expandable film is used as the adhesive or adhesive films (83, 84).

6. Process according to claim 5, characterised in that an expanded film with a closed-cell structure is used as the adhesive or adhesive film (83, 84)

7. Process according to one of claims 1 to 6, characterised in that the outer layer(s) (42) is/are bonded to the cellular core (41) during the pressing process at a temperature of 50 to 400°C, preferably 100 to 200°C.

8. Process according to claim 7, characterised in that the outer layer(s) (42) is/are bonded to the cellular core (41) in a twin-belt press (70).

9. Composite panel manufactured by a process according to claims 1 to 8.

10. Use of composite panels according to claim 9 as floor panels, side panelling, roof panels, partition walls, etc. in transport means, such as buses, railway carriages and aircraft, or on large vessels, such as containers and air freight containers, or as floor panels, wall panels or ceiling panels in or on buildings or for furniture, parts of furniture, interior fittings, parts of interior fittings, sports equipment or parts of sports equipment.

## Revendications

1. Procédé de fabrication d'une plaque composite (90) constitué par une âme cellulaire (41) et au moins une couche extérieure (42) par assemblage de la couche extérieure (42) avec l'âme cellulaire (41) au moyen d'un adhésif, où l'adhésif (84) est appliqué sur l'âme cellulaire (41), puis la couche extérieure (42) est appliquée et celle-ci est assemblée avec l'âme cellulaire (41) sous pression et à température augmentée, caractérisé en ce que l'adhésif (84) se trouve sous forme de gouttes sur l'âme cellulaire (41) uniquement au niveau des côtés frontaux des cellules et en ce que la couche extérieure (42) qui s'étend sur l'âme cellulaire comporte, sur le côté qui est dirigé vers l'âme cellulaire (41), une couche d'adhésif ou une feuille adhésive (83).

2. Procédé de fabrication d'une plaque composite (90) selon la revendication 1, caractérisé en ce qu'une feuille adhésive (84), après l'application sur l'âme cellulaire (41), est exposée à de la chaleur et à un milieu gazeux et la feuille adhésive (84) se met sous la forme d'un réseau et entoure sous forme de gouttes les arêtes frontales (82) des cellules de nid d'abeilles (80).

3. Procédé selon la revendication 2, caractérisé en ce que le milieu gazeux est de l'air et la température de l'air est judicieusement de 150°C à 450°C.

4. Procédé selon la revendication 3, caractérisé en ce que l'exposition a lieu au moyen d'une soufflerie chauffable (86).

5. Procédé selon l'une des revendications 1 à 4, caractérisé en ce qu'une feuille moussée ou moussable est utilisée comme adhésif ou comme feuilles adhésives (83, 84).

6. Procédé selon la revendication 5, caractérisé en ce qu'une feuille moussée à structure à cellules fermées est utilisée comme adhésif ou comme feuille adhésive (83, 84).

7. Procédé selon l'une des revendications 1 à 6, caractérisé en ce que l'assemblage de la couche extérieure ou des couches extérieures avec l'âme cellulaire (41) pendant le processus de pressage (42) a lieu à une température de 50 à 400°C, de préférence de 100 à 200°C.

8. Procédé selon la revendication 7, caractérisé en ce que l'assemblage de la couche extérieure ou des couches extérieures (42) avec l'âme cellulaire (41) a lieu dans une presse à double bande (70).

9. Plaque composite fabriquée par un procédé selon les revendications 1 à 8.

10. Utilisation de plaques composites selon la revendication 9 comme plaques de sol, revêtements latéraux, plaques de plafond, parois de séparation, etc. dans des dispositifs de transport tels que les bus, les voitures de chemin de fer et les avions ou sur des récipients de grande taille tels que des conteneurs et des conteneurs pour fret aérien, ou comme plaques de sol, de paroi ou de plafond dans ou sur des édifices ou pour mobilier, pièces de mobilier, agencements intérieurs, parties d'agencements intérieurs, appareils de sport ou pièces d'appareils de sport.
